(19) Europäisches Patentamt / European Patent Office / Office européen des brevets

(11) **EP 3 971 788 B1**

(12) **FASCICULE DE BREVET EUROPEEN**

(45) Date de publication et mention
de la délivrance du brevet:
**04.06.2025 Bulletin 2025/23**

(21) Numéro de dépôt: **21197826.7**

(22) Date de dépôt: **20.09.2021**

(51) Classification Internationale des Brevets (IPC):
**G06N 3/063** (2023.01)  **G06N 3/084** (2023.01)
**G06N 3/0464** (2023.01)

(52) Classification Coopérative des Brevets (CPC):
**G06N 3/063; G06N 3/0464; G06N 3/084**

(54) **MULTIPLIEUR PAR DÉCALAGES MULTIPLEXÉS ET ADDITION, CALCULATEUR ÉLECTRONIQUE DE MISE EN OEUVRE D'UN RÉSEAU DE NEURONES ET PROCÉDÉ D'APPRENTISSAGE ASSOCIÉS**

MULTIPLIKATOR DURCH MULTIPLEXVERSCHIEBUNGEN UND ADDITION, ENTSPRECHENDER ELEKTRONISCHER RECHNER ZUR IMPLEMENTIERUNG EINES NEURONALEN NETZES UND ENTSPRECHENDES LERNVERFAHREN

MULTIPLIER BY MULTIPLEXED SHIFTS AND ADDITION, ASSOCIATED ELECTRONIC COMPUTER FOR IMPLEMENTING A NEURAL NETWORK AND LEARNING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2020 FR 2009591**

(43) Date de publication de la demande:
**23.03.2022 Bulletin 2022/12**

(73) Titulaire: **Commissariat à l'Energie Atomique et aux Energies Alternatives**
**75015 Paris (FR)**

(72) Inventeurs:
• **LORRAIN, Vincent**
**91191 Gif sur Yvette Cedex (FR)**
• **BICHLER, Olivier**
**91191 Gif sur Yvette Cedex (FR)**
• **BRIAND, David**
**91191 Gif sur Yvette Cedex (FR)**
• **THIELE, Johannes Christian**
**91191 Gif sur Yvette Cedex (FR)**

(74) Mandataire: **Lavoix**
**2, place d'Estienne d'Orves**
**75441 Paris Cedex 09 (FR)**

(56) Documents cités:
**WO-A1-2019/029785     FR-A1- 3 085 517**

• **PETER TUMMELTSHAMMER ET AL: "Time-Multiplexed Multiple-Constant Multiplication", IEEE TRANSACTIONS ON COMPUTER AIDED DESIGN OF INTEGRATED CIRCUITS AND SYSTEMS, IEEE SERVICE CENTER, PISCATAWAY, NJ, US, vol. 26, no. 9, 1 September 2007 (2007-09-01), pages 1551 - 1563, XP011190966, ISSN: 0278-0070, DOI: 10.1109/TCAD.2007.893549**

**Description**

La présente invention concerne un multiplieur par décalage et addition apte à effectuer des opérations de multiplication par des valeurs multiplicatives, le multiplieur étant configuré pour recevoir en entrée une valeur exprimée sous forme binaire et délivrer en sortie le produit de la valeur reçue en entrée et d'une valeur multiplicative respective.

L'invention concerne aussi un calculateur électronique configuré pour mettre en œuvre un réseau de neurones artificiels, comprenant une pluralité de tels multiplieurs par décalage et addition, chacun étant apte à effectuer des opérations de multiplication par des valeurs de paramètre du réseau de neurones.

L'invention concerne également un procédé d'apprentissage de valeurs de paramètre d'un réseau de neurones artificiels mis en œuvre par un tel calculateur électronique.

L'invention concerne alors le domaine de l'architecture de calculateurs électroniques de mise en œuvre de réseaux de neurones artificiels, aussi notés ANN (de l'anglais *Artificial Neural Networks).*

De tels calculateurs offrent alors, via la mise en œuvre de ces réseaux de neurones, de nombreuses applications, telles qu'à titre d'exemple la classification ou l'identification d'objets préalablement détectés par un détecteur d'objets, permettant par exemple d'apprendre les identités de personnes dont le visage a été détecté par un détecteur de visages. Une autre exemple d'application est l'apprentissage automatique et non-supervisé de caractéristiques, telles que des caractéristiques de voix humaines, et les caractéristiques apprises sont ensuite utilisées pour prétraiter des données pour l'apprentissage spécialisé sur la voix d'une personne.

L'invention concerne en particulier le domaine des réseaux de neurones profonds, aussi notés DNN (de l'anglais *Deep Neural Networks).* Dans ce domaine, une des topologies les plus utilisées est le réseau de neurones convolutionnel, aussi noté CNN (de l'anglais *Convolutional Neural Networks*) et également appelé réseau de neurones convolutifs.

Parmi les multiplieurs aptes effectuer des opérations de multiplication avec une valeur multiplicative, ou constante, on connait un multiplieur par décalage et addition configuré pour recevoir en entrée une valeur exprimée sous forme binaire et délivrer en sortie le produit de la valeur reçue en entrée et de la constante.

Un tel multiplieur par décalage et addition comprend typiquement plusieurs unités de décalage (de l'anglais *shifts*)*,* chaque unité de décalage étant connectée à l'entrée et configurée pour effectuer un décalage d'un nombre prédéfini de bits vers la gauche de la valeur reçue en entrée ; et un ensemble d'unité(s) de sommation connecté directement en sortie des unités de décalage et configuré pour sommer les sorties des unités de décalage. Le nombre prédéfini de bits de décalage pour chaque unité de décalage est fonction de la valeur de la constante qu'il faut multiplier avec la valeur reçue en entrée.

Un tel multiplieur est alors facilement réalisable sous forme d'un ou plusieurs circuits intégrés dédiés, tel qu'un ou plusieurs ASIC (de l'anglais *Application-Specific Integrated Circuit),* les unités de décalage étant réalisables directement par câblage et les ressources matérielles nécessaires pour l'ensemble d'unité(s) de sommation étant moindres par rapport à un multiplieur classique.

Cependant, l'utilisation de tels multiplieurs pour effectuer toutes les opérations de multiplication par les valeurs de poids d'une couche de traitement du réseau de neurones, voire par les valeurs de poids de l'intégralité dudit réseau, engendrerait une implémentation matérielle trop complexe.

On connait alors aussi des multiplieurs aptes effectuer des opérations de multiplication avec différentes valeurs multiplicatives, également appelés multiplieurs multi-constantes. De tels multiplieurs, tels que les multiplieurs du projet Spiral de l'Université Carnegie Mellon, cherchent généralement à mutualiser des ressources calculatoires de différentes valeurs multiplicatives, afin de réduire la complexité générale du multiplieur.

L'article « Time-Multiplexed Multiple-Constant Multiplication » de Tummeltshammer et al décrit aussi un multiplieur par décalage et addition.

Cependant, si les opérateurs utilisés ne sont pas complètement combinatoires, ce qui n'est le plus souvent pas le cas, cela va introduire une latence temporelle différente pour chaque valeur multiplicative. Or, ces différentes latences sont ensuite extrêmement complexes à gérer dans le calculateur comportant de tels multiplieurs, pour la mise en œuvre du réseau de neurones.

Le but de l'invention est alors de proposer un multiplieur par décalage et addition apte à effectuer des opérations de multiplication par différentes valeurs multiplicatives, tout en minimisant une éventuelle différence entre latences temporelles pour ces différentes valeurs.

A cet effet, l'invention a pour objet un multiplieur par décalage et addition selon la revendication 1.

Ainsi, de par l'ensemble d'unité(s) de multiplexage connecté entre l'ensemble d'unités de décalage et l'ensemble d'unité(s) de sommation, le multiplieur par décalage et addition selon l'invention forme un multiplieur par décalages multiplexés et addition.

Ce multiplieur par décalages multiplexés et addition permet d'effectuer facilement des opérations de multiplication pour différentes valeurs multiplicatives, avec en outre la possibilité de contraindre que ces différentes valeurs multiplicatives comportent, lorsqu'elles sont exprimées sous forme binaire, au plus K bit(s) non-nul(s), voire exactement K bit(s) non-nul(s), où K est un nombre entier supérieur ou égal à 1.

La possibilité d'imposer le nombre maximal K de bit(s) non-nul(s) qu'offre le multiplieur selon l'invention de par son ensemble d'unité(s) de multiplexage connecté entre l'ensemble d'unités de décalage et l'ensemble d'unité(s) de sommation, cet ensemble d'unité(s) de multiplexage expliquant en outre la terminologie de décalages multiplexés, permet alors de limiter ou réduire le nombre d'unité(s) de sommation au sein de l'ensemble d'unité(s) de sommation, en comparaison avec un multiplieur par décalage et addition de l'état de la technique. Ce nombre limité ou réduit d'unité(s) de sommation autorise alors une plus grande rapidité de calcul et une plus faible consommation électrique.

La prédétermination du nombre maximal K de bit(s) non-nul(s) pour chaque multiplieur par décalages multiplexés et addition selon l'invention est typiquement effectuée lors de l'apprentissage de valeurs de paramètre, tels que valeurs de poids et/ou de biais, d'un réseau de neurones artificiels mis en œuvre par un calculateur électronique comprenant une pluralité de tels multiplieurs par décalages multiplexés et addition, comme cela sera décrit plus en détail par la suite.

Le multiplieur par décalages multiplexés et addition selon l'invention permet aussi de minimiser une éventuelle différence entre latences temporelles pour les valeurs multiplicatives respectives, de par l'utilisation des mêmes unités de décalage, ensemble d'unité(s) de multiplexage et ensemble d'unité(s) de sommation, quelle que soit la valeur multiplicative.

De préférence, l'ensemble d'unité(s) de sommation est en forme d'un arbre (de l'anglais *adder tree*), ce qui permet de minimiser encore davantage cette éventuelle différence entre latences temporelles.

Suivant d'autres aspects avantageux de l'invention, le multiplieur est selon l'une quelconque des revendications 2 à 5.

L'invention a également pour objet un calculateur électronique selon la revendication 6.

Suivant un autre aspect avantageux de l'invention, le calculateur est selon la revendication 7.

L'invention a aussi pour objet un procédé d'apprentissage de valeurs de paramètre, tels que valeurs de poids et/ou de biais, d'un réseau de neurones artificiels, selon la revendication 8.

Suivant d'autres aspects avantageux de l'invention, le procédé d'apprentissage est selon la revendication 9 ou 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un multiplieur par décalages multiplexés et addition apte à effectuer des opérations de multiplication par différentes valeurs multiplicatives, en recevant en entrée une valeur exprimée sous une forme binaire et en délivrant en sortie le produit de la valeur reçue en entrée et d'une valeur multiplicative respective, selon un premier mode de réalisation de l'invention ;
- la figure 2 est un diagramme illustrant les différentes valeurs possibles pour la valeur multiplicative utilisée par le multiplieur de la figure 1, en fonction d'un nombre maximal de bit(s) non-nul(s) de la forme binaire de ladite valeur multiplicative ;
- la figure 3 est une représentation schématique d'un calculateur électronique configuré pour mettre en œuvre un réseau de neurones artificiels, le calculateur comprenant une pluralité de multiplieurs par décalage et addition, au moins un, et de préférence chaque, multiplieur par décalage et addition étant tel que celui de la figure 1 ;
- la figure 4 est un organigramme d'un procédé, selon l'invention, d'apprentissage de valeurs de paramètres du réseau de neurones artificiels mis en œuvre par le calculateur électronique de la figure 3 ;
- la figure 5 est une vue analogue à celle de la figure 1, selon un deuxième mode de réalisation de l'invention ; et
- la figure 6 est une vue analogue à celle de la figure 2, selon le deuxième mode de réalisation de l'invention.

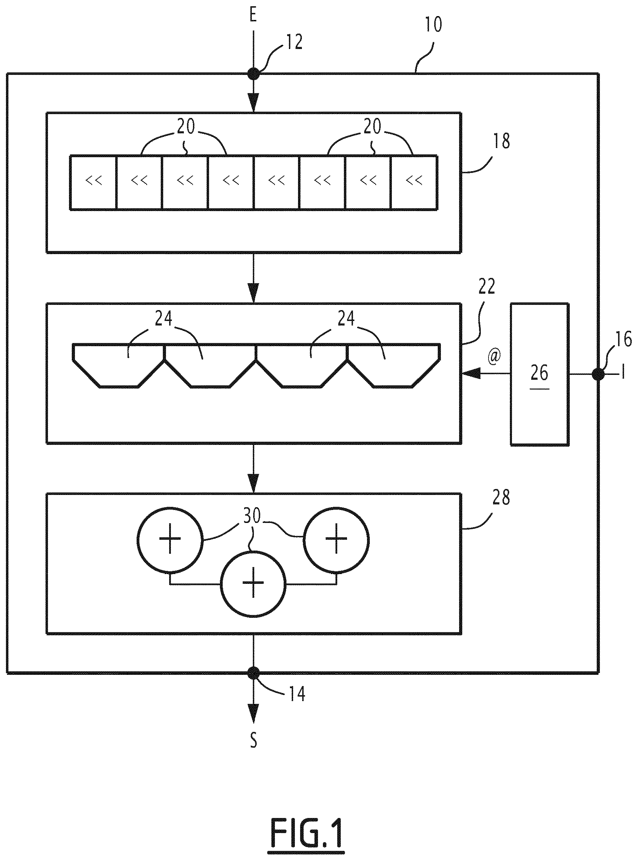

Sur la figure 1, un multiplieur par décalages multiplexés et addition 10 est apte à effectuer des opérations de multiplication par des valeurs multiplicatives, et comprend un bus d'entrée 12, un bus de sortie 14, ainsi qu'une borne de commande 16.

Le multiplieur par décalages multiplexés et addition 10 est configuré pour recevoir en entrée, c'est-à-dire sur son bus d'entrée 12, une valeur E exprimée sous forme binaire, et pour délivrer en sortie, c'est-à-dire sur son bus de sortie 14, une sortie S égale au produit de la valeur E reçue en entrée et d'une valeur multiplicative respective, la valeur multiplicative respective étant typiquement déterminée à partir d'une instruction de commande I reçue en la borne de commande 16.

Le multiplieur par décalages multiplexés et addition 10, également appelé par la suite multiplieur 10 par souci de concision, comprend un premier ensemble 18 de plusieurs unités de décalage 20, chaque unité de décalage 20 étant apte à effectuer un décalage de P bit(s) de la valeur reçue en entrée.

Selon l'invention, le multiplieur 10 comprend en outre un deuxième ensemble 22 d'unité(s) de multiplexage 24, connecté en sortie du premier ensemble 18 d'unités de décalage 20, ainsi qu'une unité 26 de commande du deuxième ensemble 22 d'unité(s) de multiplexage 24.

Le multiplieur 10 comprend également un troisième ensemble 28 d'unité(s) de sommation 30, connecté en sortie du deuxième ensemble 22 d'unité(s) de multiplexage 24 et configuré pour sommer les sorties des unités de décalage 20 sélectionnées par ledit deuxième ensemble 22 d'unité(s) de multiplexage 24.

Le premier ensemble 18 comprend plusieurs unités de décalage 20. Le premier ensemble 18 comprend par exemple N unités de décalage 20, où N est le nombre de bits de la forme binaire reçue en entrée du multiplieur 10. Le premier ensemble 18 est également appelé module de décalage.

Dans l'exemple de la figure 1, la forme binaire de la valeur E reçue sur le bus d'entrée 12 est constituée de 8 bits, c'est-à-dire N est égal à 8, et le premier ensemble 18 comporte alors typiquement huit unités de décalage 20.

Chaque unité de décalage 20 est connectée au bus d'entrée 12, afin de pouvoir effectuer un décalage d'un certain nombre de bit(s) de la valeur reçue en entrée en parallèle et séparément des autres unités de décalage 20.

Chaque unité de décalage 20 est connue en soi, et est configurée pour effectuer un décalage de P bit(s) de la valeur E reçue en entrée, où P est compris entre 0 et N-1, avec N le nombre de bits de la forme binaire en entrée, P variant d'une unité de décalage 20 à l'autre. L'homme du métier observera qu'un décalage de N bits est identique à un décalage de 0 bit, où N est le nombre de bits de la forme binaire en entrée de l'unité de décalage 20, de sorte que P est de manière analogue compris entre 1 et N.

Le décalage de P bit(s) effectué par chaque unité de décalage 20 est typiquement un décalage de P bit(s) à gauche de la valeur binaire E, afin d'effectuer une multiplication par $2^P$ de cette valeur binaire E pour P compris entre 0 et N-1.

L'homme du métier observera que le nombre d'unités de décalage 20 formant le premier ensemble 18 est inférieur ou égal au nombre N de bits de la forme binaire reçue sur le bus d'entrée 12. Ce nombre d'unités de décalage 20 inclus dans le premier ensemble 18 n'est pas nécessairement égal au nombre N de bits de la forme binaire reçue en l'entrée. Le nombre d'unités de décalage 20 dépend typiquement et de préférence des différentes valeurs multiplicatives que le multiplieur 10 considéré devra être apte à multiplier à la valeur binaire E reçue sur le bus d'entrée 12, en particulier d'un nombre maximal K de bit(s) non-nul(s) de la liste des différentes valeurs multiplicatives associées audit multiplieur 10. Le nombre d'unités de décalage 20 est en particulier encore égal au nombre de positions distinctes auxquelles se trouve un bit non-nul, i.e. un bit à 1, parmi les formes binaires des différentes valeurs multiplicatives associées audit multiplieur 10.

Le deuxième ensemble 22 d'unité(s) de multiplexage 24 est connecté entre le premier ensemble 18 d'unités de décalage 20 et le troisième ensemble 28 d'unité(s) de sommation 30. Le deuxième ensemble 22 est également connecté à l'unité de commande 26.

Le deuxième ensemble 22 comprend une ou plusieurs unités de multiplexage 24, et est également appelé module de multiplexage. Le nombre d'unité(s) de multiplexage 24 formant le deuxième ensemble 22 dépend typiquement de la liste des différentes valeurs multiplicatives associées au multiplieur 10. Le nombre d'unité(s) de multiplexage 24 contenue(s) dans le deuxième ensemble 22 est supérieur ou égal au nombre maximal K de bit(s) non-nul(s), et typiquement égal audit nombre maximal K.

Le module de multiplexage est alors apte à multiplexer simultanément jusqu'à K décalages effectués simultanément par le module de décalage, lorsque la valeur multiplicative à traiter par le multiplieur 10 comporte au plus K bit(s) non-nul(s).

Le deuxième ensemble 22 d'unité(s) de multiplexage 24 est configuré pour sélectionner, en fonction d'une valeur multiplicative respective, une ou plusieurs sorties correspondantes des unités de décalage 20 du premier ensemble 18 et pour les délivrer au troisième ensemble 28 d'unité(s) de sommation 30.

Le deuxième ensemble 22 est par exemple configuré pour effectuer ladite sélection de la ou des sorties correspondantes des unités de décalage 20 en fonction d'un signal de commande reçu de la part de l'unité de commande 26, ce signal de commande représentant la valeur multiplicative respective.

Les connexions entre la ou les unités de multiplexage 24 du deuxième ensemble 22 et la ou les sorties des unités de décalage 20 correspondantes sont déterminées à partir de la liste de valeur(s) multiplicative(s) associée(s) au multiplieur 10, comme illustré à travers un exemple de mise en œuvre ci-après.

Chaque unité de multiplexage 24 comporte par exemple M entrées et une sortie, où M est le nombre de valeurs multiplicatives différentes à traiter par le multiplieur 10 et où chaque entrée et sortie est en forme d'un mot de N bits. Autrement dit, chaque unité de multiplexage 24 est apte à recevoir M x N bits en entrée et à délivrer N bits de sortie.

Chaque unité de multiplexage 24 est typiquement configurée pour délivrer en sortie l'un des M mots de N bits reçus en entrée, et ce en fonction de la valeur du signal de commande reçu de la part de l'unité de commande 26, c'est-à-dire en fonction de la valeur multiplicative à traiter par le multiplieur 10.

L'unité de commande 26 est configurée pour commander le deuxième ensemble 22 d'unité(s) de multiplexage 24 pour sélectionner les sorties respectives des unités de décalage 20 du premier ensemble 18, en fonction de la valeur multiplicative respective, et pour délivrer, au troisième ensemble 28 d'unité(s) de sommation 30, les valeurs binaires présentes en ces sorties des unités de décalage 20.

L'unité de commande 26 est par exemple configurée pour recevoir via la borne de commande 16 l'instruction I indiquant la valeur multiplicative respective à multiplier avec la valeur binaire E reçue sur le bus d'entrée 12, puis pour convertir cette instruction I correspondant à la valeur multiplicative en un signal de commande transmis à la ou aux unités de multiplexage 24 pour effectuer la sélection des sorties des unités de décalage 20 correspondant à ladite valeur multiplicative. Le signal de commande transmis par l'unité de commande 26 à chaque unité de multiplexage 24 est typiquement en forme d'une adresse @, où chaque valeur de l'adresse @ correspond à une valeur multiplicative respective prédéfinie.

Le troisième ensemble 28 d'unité(s) de sommation 30 est connecté en sortie du deuxième ensemble 22, et est configuré pour sommer les sorties des unités de décalage 20 sélectionnées par la ou les unités de multiplexage 24 du deuxième ensemble 22.

Le troisième ensemble 28 comporte une ou plusieurs unités de sommation 30, et est également appelé module de sommation. Chaque unité de sommation 30 est configurée pour effectuer la somme des valeurs reçues en ses entrées.

Le nombre d'entrées du troisième ensemble 28, c'est-à-dire le nombre d'entrées de la ou des unités de sommation 30 qui sont directement connectées en sortie d'une unité de multiplexage 24 respective, est égal au nombre d'unités de multiplexage 24 au sein du deuxième ensemble 22, chaque entrée étant en forme d'un mot de N bits.

En complément facultatif, le troisième ensemble 28 d'unité(s) de sommation 30 est en forme d'un arbre, tel qu'un arbre d'additionneurs (de l'anglais *adder tree*).

Selon ce complément facultatif, le troisième ensemble 28 d'unité(s) de sommation 30 comporte, pour chaque paire respective d'unités de multiplexage 24, une unité de sommation 30 connectée en sortie de ladite paire d'unités de multiplexage 24. Si le nombre d'unités de multiplexage 24 est supérieur à 2, le troisième ensemble 28 comporte alors une ou plusieurs autres unités de sommation 30, chacune étant connectée en sortie d'une paire respective d'unités de sommation 30, de manière à former l'arbre précité.

En complément facultatif encore, le troisième ensemble 28 d'unité(s) de sommation 30 comprend en outre une unité d'addition constante, non représentée, pour ajouter une valeur de biais à la valeur multiplicative respective.

Chaque unité de sommation 30 est par exemple un additionneur à deux entrées, et est alors configurée pour effectuer la somme des valeurs reçues en ses deux entrées. Chaque additionneur comporte alors deux entrées et une sortie, où les entrées et sortie sont chacune en forme d'un mot de N bits. Autrement dit, chaque additionneur est apte à recevoir 2 x N bits en entrée et à délivrer N bits en sortie.

A titre d'exemple de mise en œuvre, on considère un multiplieur 10 avec N = 4, M = 3 et K = 2, c'est-à-dire un multiplieur 10 apte à recevoir des valeurs d'entrée E de 4 bits et à délivrer des sorties S de 4 bits, avec 3 valeurs multiplicatives associées, chaque valeur multiplicative ayant au plus 2 bits non-nuls.

Dans cet exemple, le module de multiplexage comporte alors typiquement deux unités de multiplexage 24, chaque unité de multiplexage 24 ayant trois entrées de 4 bits chacune et une sortie de 4 bits. Chaque entrée de chaque unité de multiplexage 24 est associée à une valeur multiplicative respective. Par exemple, une première adresse @0 est associée à une première valeur multiplicative, telle que 5, soit 0101 en binaire, permettant de sélectionner une première entrée de chaque unité de multiplexage 24 ; une deuxième adresse @1 est associée à une deuxième valeur multiplicative, telle que 4, soit 0100 en binaire, permettant de sélectionner une deuxième entrée de chaque unité de multiplexage 24 ; et une troisième adresse @2 est associée à une troisième valeur multiplicative, telle que 10, soit 1010 en binaire, permettant de sélectionner une troisième entrée de chaque unité de multiplexage 24.

Pour effectuer une multiplication par la première valeur multiplicative égale à 0101, il est nécessaire d'effectuer un décalage de 0 bit et un décalage de 2 bits, de sorte que la première entrée d'une unité de multiplexage 24 doit être connectée en sortie de l'unité de décalage 20 ayant P = 0, et la première entrée de l'autre unité de multiplexage 24 doit être connectée en sortie de l'unité de décalage 20 ayant P = 2.

Pour effectuer une multiplication par la deuxième valeur multiplicative égale à 0100, il est nécessaire d'effectuer un seul décalage de 2 bits, de sorte que la deuxième entrée d'une unité de multiplexage 24 doit être connectée en sortie de l'unité de décalage 20 ayant P = 2, la deuxième entrée de l'autre unité de multiplexage 24 n'étant connectée à aucune unité de décalage 20.

Enfin, pour effectuer une multiplication par la troisième valeur multiplicative égale à 1010, il est nécessaire d'effectuer un décalage de 1 bit et un décalage de 3 bits, de sorte que la troisième entrée d'une unité de multiplexage 24 doit être connectée en sortie de l'unité de décalage 20 ayant P = 1, et la troisième entrée de l'autre unité de multiplexage 24 doit être connectée en sortie de l'unité de décalage 20 ayant P = 3.

Dans cet exemple, le module de sommation comporte une seule unité de sommation 30, à savoir un seul additionneur à deux entrées de 4 bits. Cet additionneur étant connecté en sortie des deux unités de multiplexage 24, et est alors configuré pour effectuer la somme des 2 mots de 4 bits fournis simultanément en sortie du module de multiplexage via ses deux unités de multiplexage 24.

Le résultat de la multiplication de la valeur d'entrée E de 4 bits par l'une des première, deuxième et troisième valeurs multiplicatives est alors la somme des 2 mots de 4 bits fournis en sortie du module de multiplexage, chacun étant le résultat d'un décalage respectif de P bit(s) à gauche de la valeur d'entrée E, avec les valeurs précitées pour P selon la valeur multiplicative considérée.

L'homme du métier observera alors qu'une même unité de décalage 20 est susceptible d'être connectée à plusieurs entrées distinctes du module de multiplexage, telles que des entrées distinctes d'une même unité de multiplexage 24 ou des entrées d'unités de multiplexage 24 distinctes, ce cas de figure se produisant lorsque deux valeurs multiplicatives distinctes présentent dans leur forme binaire un bit non-nul, i.e. un bit à 1, en une même position, tel qu'illustré dans l'exemple précédent pour le bit à 1 en 3$^e$ position dans les valeurs multiplicatives 0101 et 0100, P étant alors égal à 2.

L'homme du métier notera également qu'une ou plusieurs entrées du module de multiplexage sont susceptibles d'être connectées à aucune unité de décalage 20, ce cas de figure se produisant lorsqu'une ou plusieurs valeurs multiplicatives présentent un nombre de bit(s) non-nul(s), i.e. un nombre de bit(s) à 1, strictement inférieur au nombre maximal K, tel qu'illustré dans l'exemple précédent pour la deuxième valeur multiplicative égale à 0100 avec un seul bit à 1 et K égal à 2.

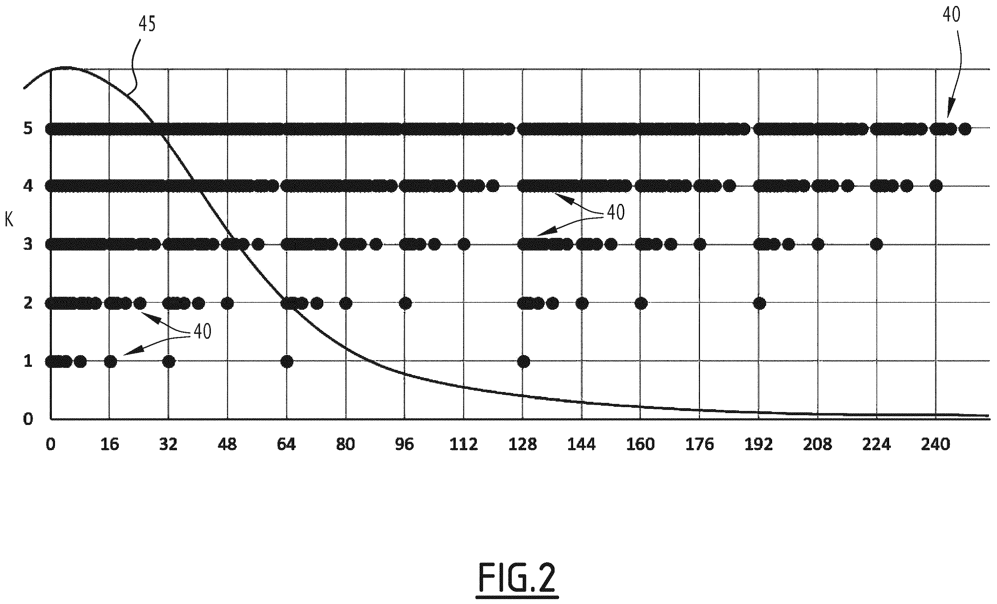

Dans l'exemple de la figure 1, la valeur binaire E reçue sur le bus d'entrée 12 et chaque valeur multiplicative respective sont supposées des valeurs non signées, et la liste des valeurs multiplicatives possibles en fonction du nombre maximal K de bit(s) non-nul(s) est représentée à la figure 2.

Sur la figure 2, pour chaque valeur du nombre maximal K de bit(s) non-nul(s), comprise entre 1 et 5, les valeurs multiplicatives possibles sont représentées sous forme d'une rangée horizontale 40 de points avec chaque point correspondant à une valeur multiplicative possible. Une courbe 45 représente en outre schématiquement un histogramme de valeurs de poids d'un réseau de neurones artificiels RN mis en œuvre par un calculateur électronique 50 selon l'invention, qui sera décrit plus en détail ci-après.

La valeur du nombre maximal K de bit(s) non-nul(s) est alors de préférence supérieure ou égale à 2, afin de proposer un nombre suffisant de valeurs multiplicatives possibles. La valeur dudit nombre maximal K est typiquement comprise entre 2 et 6, et de préférence encore comprise entre 3 et 5.

L'homme du métier observera que ces valeurs multiplicatives possibles, visibles sur la figure 2, correspondent à des décompositions en puissance(s) de 2, où le nombre maximal de puissance(s) de 2 correspond au nombre maximal K de bit(s) non-nul(s).

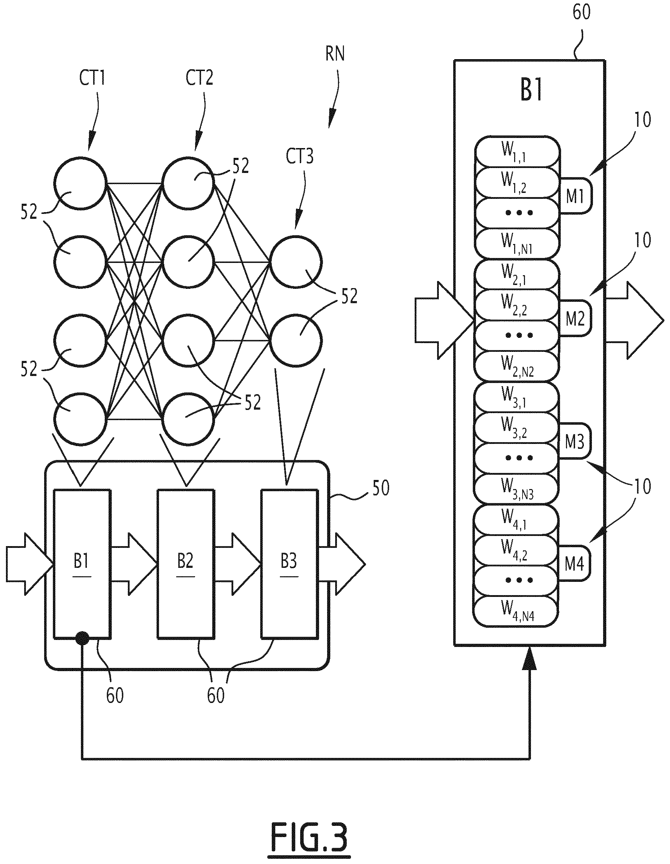

Sur la figure 3, le calculateur électronique 50 selon l'invention est configuré pour mettre en œuvre le réseau de neurones artificiels RN, celui-ci comportant typiquement plusieurs couches de traitement successives CTi, où i est un indice entier supérieur ou égal à 1. Dans l'exemple de la figure 3, l'indice i est par exemple égal à 1, 2 et respectivement 3, avec des première CT1, deuxième CT2 et troisième CT3 couches de traitement représentées sur cette figure 3. Chaque couche de traitement respective CTi comporte, comme connu en soi, un ou plusieurs neurones artificiels 52, également appelé neurones formels.

Les couches de traitement CTi sont typiquement agencées de manière successive au sein du réseau de neurones RN, et les neurones artificiels 52 d'une couche de traitement donnée sont typiquement connectés à leur entrée aux neurones artificiels 52 de la couche précédente, et en sortie aux neurones artificiels 52 de la couche suivante. Les neurones artificiels 52 de la première couche, telle que la première couche de traitement CT1, sont connectés en entrée aux variables d'entrées, non représentées, du réseau de neurones RN, et les neurones artificiels 52 de la dernière couche de traitement, telle que la troisième couche de traitement CT3, sont connectés en sortie aux variables de sortie, non représentées, du réseau de neurones RN. Dans l'exemple de la figure 3, la deuxième couche de traitement CT2 forme alors une couche intermédiaire dont les neurones artificiels 52 sont connectés en entrée aux neurones artificiels 52 de la première couche de traitement CT1, et en sortie aux neurones artificiels 52 de la troisième couche de traitement CT3.

Comme connu en soi, à chaque neurone artificiel 52 est associé une opération, c'est-à-dire un type de traitement, à effectuer par ledit neurone artificiel 52 au sein de la couche de traitement correspondante. Chaque neurone artificiel 52 est typiquement apte à effectuer une somme pondérée de valeur(s) reçue(s) en entrée de la part du ou des éléments connectés à son entrée, tels que variables d'entrée ou autres neurones artificiels 52, chaque valeur en entrée du neurone 52 étant alors multipliée par une valeur de poids respective, puis à appliquer une fonction d'activation, typiquement une fonction non-linéaire, à ladite somme pondérée, et à délivrer au(x) élément(s) connecté(s) à sa sortie la valeur résultant de l'application de ladite fonction d'activation. En complément optionnel, le neurone artificiel 52 est également apte à appliquer en outre un facteur multiplicatif, également appelé biais, à la sortie de la fonction d'activation, et la valeur délivrée au(x) élément(s) connecté(s) en sortie, tels que variables de sortie ou neurones artificiels 52 de la couche suivante, est alors le produit de la valeur de biais et de la valeur en sortie de la fonction d'activation.

Le calculateur électronique 10 comprend par exemple plusieurs blocs électroniques de calcul 60, chacun étant configuré pour mettre en œuvre une couche de traitement CTi respective. Dans l'exemple de la figure 3, le calculateur électronique 50 comprend trois blocs électroniques de calcul 60, à savoir un premier bloc de calcul B1 apte à mettre en œuvre la première couche de traitement CT1, un deuxième bloc de calcul B2 apte à mettre en œuvre la deuxième couche de traitement CT2, et un troisième bloc de calcul B3 apte à mettre en œuvre la troisième couche de traitement CT3.

Le calculateur électronique 50 comprend une pluralité de multiplieurs par décalage et addition, chacun étant apte à effectuer des opérations de multiplication par des valeurs de paramètres du réseau de neurones RN, telles que des valeurs de poids et/ou de biais.

Selon l'invention, au moins un, de préférence, chaque multiplieur par décalage et addition est le multiplieur 10 décrit précédemment en regard de la figure 1, les valeurs multiplicatives étant alors lesdites valeurs de paramètres du réseau de neurones RN, telles que des valeurs de poids et/ou de biais.

Dans l'exemple de la figure 3, le premier bloc de calcul B1 comprend ladite pluralité de multiplieurs par décalage et addition. Dans cet exemple de la figure 1, tous les multiplieurs par décalage et addition sont des multiplieurs par décalages multiplexés et addition 10, tels que décrits précédemment en regard de la figure 1.

Dans l'exemple de la figure 3, le premier bloc de calcul B1 comporte quatre multiplieurs par décalages multiplexés et addition 10, à savoir un premier multiplieur M1, un deuxième multiplieur M2, un troisième multiplieur M3 et un quatrième multiplieur M4. Dans cet exemple de la figure 3, les valeurs de poids formant les valeurs multiplicatives sont respectivement notées $W_{j,k}$ où j est un indice entier de valeur supérieure ou égale à 1 et désignant le multiplieur par décalages multiplexés et addition 10 correspondant, et k est un indice entier de valeur supérieure ou égale à 1 et désignant la valeur de poids parmi toutes les valeurs de poids associées à ce multiplieur 10. A titre d'exemple, les valeurs de poids associées au premier multiplieur M1 sont alors notées $W_{1,1}$, $W_{1,2}$, ..., $W_{1,N1}$ où N1 représente le nombre de valeurs de poids, c'est-à-dire le nombre de valeurs multiplicatives, associées au premier multiplieur M1 qui est un multiplieur par décalages multiplexés et addition 10 selon l'invention.

Le calculateur électronique 10 est par exemple réalisé sous forme d'un ou plusieurs circuits intégrés dédiés, tels qu'un ou plusieurs ASIC (de l'anglais *Application Specific Integrated Circuit*).

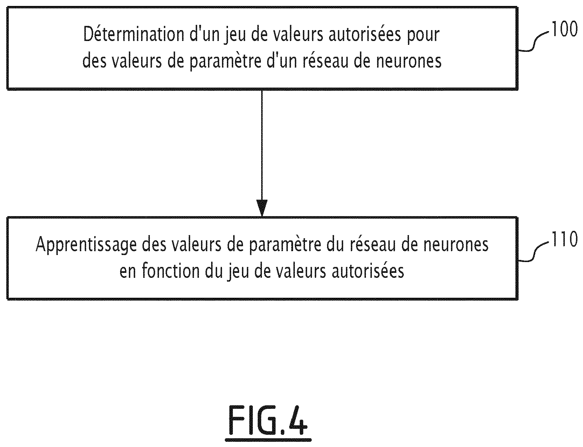

L'apprentissage de valeurs de paramètres, telles que valeurs de poids et/ou de biais, du réseau de neurones artificiels RN mis en œuvre par le calculateur électronique 50 selon l'invention, va désormais être décrit en regard de la figure 4 représentant un organigramme d'un procédé d'apprentissage selon l'invention de telles valeurs de paramètres du réseau de neurones artificiels RN.

Lors d'une étape initiale 100, un jeu de valeurs autorisées pour le ou les paramètres destinés à être appris, tels que valeur de poids et/ou valeur de biais, est déterminé.

Lors de cette étape 100 de détermination du jeu de valeurs autorisées pour les valeurs de paramètres du réseau de neurones RN, une contrainte est imposée quant au nombre de bit(s) non-nul(s) de la valeur binaire pour chaque paramètre destiné à être appris. En particulier, le jeu de valeurs autorisées est constitué des valeurs qui, lorsqu'elles sont exprimées sous forme binaire, comportent au plus K bit(s) non-nul(s), où K est un nombre entier supérieur ou égal à 1. Le jeu de valeurs autorisées est par exemple constitué des valeurs qui, lorsqu'elles sont exprimées sous forme binaire, comportent exactement K bit(s) non-nul(s).

Une contrainte complémentaire est que le jeu de valeurs autorisées est compris entre une valeur minimale $Q_{min}$ et une valeur maximale $Q_{max}$, et la valeur maximale $Q_{max}$ vérifie par exemple l'équation suivante :

[Math 1]

$$Q_{max} = \sum_{b=N-K_{ex}}^{N-1} 2^b$$

où $Q_{max}$ représente la valeur maximale du jeu de valeurs autorisées,
$K_{ex}$ représente le nombre exact de bit(s) non-nul(s) de la valeur binaire,
N représente le nombre total de bits de la valeur binaire.

Une contrainte optionnelle supplémentaire est d'imposer que la valeur maximale $Q_{max}$ forme une valeur d'écrêtage, et alors que toutes les valeurs des paramètres appris supérieures ou égales à $Q_{max}$ soient écrêtées à cette valeur maximale $Q_{max}$.

Lorsque la contrainte pour le jeu de valeurs autorisées est qu'il soit constitué des valeurs qui comportent exactement $K_{ex}$ bit(s) non-nul(s), le nombre NA de valeurs autorisées vérifie typiquement l'équation suivante :

[Math 2]

$$NA = \frac{N!}{(N - K_{ex})! \cdot K_{ex}!}$$

où NA représente le nombre de valeurs dans le jeu de valeurs autorisées ;
N représente le nombre total de bits de la valeur binaire ; et
$K_{ex}$ représente le nombre exact de bit(s) non-nul(s) de la valeur binaire, et
! représente la notation factorielle.

Pour $K_{ex} = 1$ et N = 3, le nombre NA de valeurs autorisées est alors égal à 3, à savoir les valeurs suivantes : 001, 010 et 100. De manière analogue, pour $K_{ex} = 2$ et N = 4, le nombre NA de valeurs autorisées est égal à 6, à savoir les six valeurs suivantes : 0011, 0101, 0110, 1001, 1010 et 1100.

Lorsque la contrainte relative au jeu de valeurs autorisées est d'avoir au plus K bit(s) non-nul(s), le jeu de valeurs autorisées est par exemple déterminé via une table de correspondance (de l'anglais *look-up table*).

En variante, ce jeu de valeurs autorisées avec au plus K bit(s) non-nul(s), est déterminé en retranchant à une valeur cible la plus grande puissance de 2 inférieure à cette valeur cible, puis en retranchant au reste de cette soustraction initiale, la plus grande puissance de 2 qui est inférieure audit reste, et ainsi de suite. La valeur autorisée correspond alors à la somme des puissances de 2 ainsi obtenues. A titre d'exemple, si la valeur cible est égale à 13, et que K = 2 et N = 4, la plus grande puissance de 2 inférieure à 13 est 8, et le reste de la soustraction initiale est alors égale à 5, et la plus grande puissance de 2 inférieure ou égale au reste 5 est alors 4, de sorte que la valeur autorisée la plus proche de la valeur cible 13 et ayant au plus 2 bits non-nuls est 12, correspondant à la valeur binaire à 1100.

En complément facultatif, en notant Q une fonction de quantification définissant l'ensemble des valeurs autorisées Q(x) pour les paramètres du réseau de neurones RN, l'homme du métier observera que la fonction Q n'est pas dérivable, étant donné que les valeurs possibles Q(x) pour la fonction Q forment un ensemble de valeurs discrètes.

En complément facultatif, l'état de détermination 100 comporte alors en outre l'estimation d'un élément parmi une table de correspondance de valeurs de gradient pour le jeu de valeurs autorisées et une fonction dérivable F modélisant le jeu de valeurs autorisées.

Selon ce complément facultatif, lorsqu'il est nécessaire de dériver la fonction de quantification Q lors d'une étape suivante 110 d'apprentissage des valeurs de paramètre(s) du réseau de neurones RN, typiquement lorsque cette étape d'apprentissage 110 comporte un algorithme de rétro-propagation (de l'anglais *back propagation*) pour le calcul du gradient de chaque paramètre du réseau de neurones RN, alors le gradient est calculé à partir de l'élément estimé, c'est-à-dire à partir de la table de correspondance de valeurs de gradients pour le jeu de valeurs autorisées ou bien à partir d'une dérivée de la fonction dérivable F qui modélise le jeu de valeurs autorisées.

Lorsque le jeu de valeurs autorisées correspond approximativement à une distribution uniforme de valeurs, la fonction dérivable F est par exemple la fonction linéaire vérifiant F(x) = x.

En variante, lorsque la distribution des valeurs autorisées n'est pas une distribution uniforme, typiquement lorsque de nombreuses valeurs sont concentrées autour d'une faible valeur, ou bien d'une valeur élevée, il est préférable de choisir une fonction plus complexe que la fonction linéaire précitée, et la fonction dérivable est par exemple une fonction affine par morceaux qui est définie analytiquement, soit par ajustement ou bien par expérimentation, ou encore d'une fonction d'interpolation correspondant à la distribution non-uniforme, telle qu'une fonction d'interpolation spline des points.

Alternativement, le calcul du gradient de chaque paramètre du réseau de neurones est effectué via la table de correspondance de gradients pour le jeu de valeurs autorisées, et à chaque valeur autorisée, c'est-à-dire à chaque valeur possible Q(x) de la fonction de quantification Q, est associée une valeur de gradient dans la table de correspondance (de l'anglais *look-up table*).

Lors de l'étape d'apprentissage 110, les valeurs du ou des paramètres du réseau de neurones RN, ces paramètres étant typiquement des valeurs de poids et/ou des valeurs de biais, sont apprises à partir de données d'apprentissage, comme connu en soi.

Selon l'invention, l'étape d'apprentissage 110 est alors effectuée en fonction en outre du jeu de valeurs autorisées, chaque valeur apprise du paramètre du réseau de neurones RN devant être choisie parmi le jeu de valeurs autorisées. L'homme du métier comprendra alors que ce jeu de valeurs autorisées, c'est-à-dire les valeurs possibles Q(x) de la fonction de quantification Q, forme une contrainte lors de l'étape d'apprentissage 110.

En complément facultatif, l'étape d'apprentissage 110 est effectuée via un algorithme de rétro-propagation pour le calcul du gradient de chaque paramètre du réseau de neurones RN, et le gradient est alors calculé à partir de l'élément estimé lors de l'étape de détermination 100 initiale, cet élément estimé étant choisi parmi la table de correspondance de valeurs de gradient pour le jeu de valeurs autorisées et la fonction dérivable F modélisant le jeu des valeurs autorisées, c'est-à-dire modélisant la fonction de quantification Q qui est non-dérivable.

L'homme du métier observera alors que le nombre maximal K de bit(s) non-nul(s) est prédéfini et susceptible de différer d'un multiplieur par décalages multiplexés et addition 10 à l'autre au sein du calculateur 50 selon l'invention.

A titre d'exemple, lorsque le réseau de neurones artificiels RN comporte plusieurs couches de traitement CTi, l'étape d'apprentissage 110 est typiquement effectuée de manière séparée pour chacune de couches CTi du réseau de neurones RN, et l'étape de détermination 100 est également effectuée de manière séparée pour chaque couche, avec alors la possibilité d'avoir une valeur du nombre maximal K de bit(s) non-nul(s) variable d'une couche de traitement CTi à l'autre, puis d'un multiplieur par décalages multiplexés et addition 10 à l'autre lors de la mise en œuvre du réseau de neurones RN par le calcul électronique 50 selon l'invention. En effet, lors de cette mise en œuvre, à chaque couche de traitement CTi est associée un ensemble de multiplieur(s) par décalages multiplexés et addition 10 selon l'invention.

Ainsi, le multiplieur par décalages multiplexés et addition 10 selon l'invention permet d'effectuer de manière efficace des opérations de multiplication pour différentes valeurs multiplicatives et offre en outre la possibilité d'imposer que ces différentes valeurs multiplicatives comportent, lorsqu'exprimées sous forme binaire, au plus K bit(s) non-nul(s), voire exactement K bit(s) non-nul(s), avec K nombre entier supérieur ou égal à 1. Cette possibilité de contrainte du nombre de bit(s) non-nul(s) qu'offre le multiplieur 10 selon l'invention de par son ensemble 22 d'unité(s) de multiplexage 24 connecté entre l'ensemble 18 d'unités de décalage 20 et l'ensemble 28 d'unité(s) de sommation 30 permet alors d'avoir un nombre limité d'unité(s) de sommation 30 au sein du troisième ensemble 28, ce nombre d'unités de sommation 30 dépendant typiquement du nombre d'unité(s) de multiplexage 24, qui dépend lui-même du nombre maximal K de bit(s) non-nul(s) qui est typiquement prédéterminé pour chaque multiplieur 10 selon l'invention.

A titre d'exemple, lorsque le nombre maximal K de bits non-nuls est égal à 3 ou respectivement 4, le nombre d'unités de multiplexage 24 est égal à 3 ou respectivement 4, et le nombre d'unités de sommation 30 est typiquement égal à 3 lorsque le troisième ensemble 28 est en forme d'arbre.

Lorsque le nombre maximal K de bits non-nuls est égal à 5 ou 6, le nombre d'unités de multiplexage 24 est égal à 5 ou 6, et le nombre d'unités de sommation est typiquement égal à 6.

En complément, lorsque le nombre maximal K de bit(s) non-nul(s) est imposé pour le multiplieur par décalages multiplexés et addition 10 selon l'invention, une éventuelle différence entre latences temporelles pour différentes valeurs multiplicatives respectives est minimisée, cette différence étant même de préférence nulle, étant donné que selon ce complément facultatif, le nombre d'unité(s) de sommation 30 du troisième ensemble 28 est figé, ce nombre fixe d'unité(s) de sommation 30 au sein du troisième ensemble 28 dépendant du nombre d'unité(s) de multiplexage 24 lui-même dépendant du nombre maximal K de bit(s) non-nul(s), et la latence de calcul est alors figée. En effet, de par l'architecture du multiplieur 10 selon l'invention, où les unités de décalage 20 sont agencées en parallèle les unes des autres au sein du premier ensemble 18, où les unités de multiplexage 24 sont également agencées en parallèle les unes des autres au sein du deuxième ensemble 22, une éventuelle variabilité de la latence de calcul est alors essentiellement, voire seulement, due à une différence de latence de calcul au sein du troisième ensemble 28 d'unité(s) de sommation 30. Or, lorsqu'en complément facultatif le nombre maximal K de bit(s) non-nul(s) est imposé, ceci permet alors également d'imposer le nombre d'unité(s) de sommation 30 au sein du troisième ensemble 28, ainsi que leur agencement, par exemple en forme d'un arbre, et la latence de calcul associée à ce troisième ensemble 28 d'unités de sommation 30 est alors prédictible, et typiquement figée quelle que soit la valeur multiplicative associée à ce nombre maximal K de bit(s) non-nul(s).

En outre, lorsque le calculateur électronique 50 et les différents multiplieurs 10 qu'il comprend sont réalisés sous forme d'un ou plusieurs circuits intégrés dédiés, tel qu'un ou plusieurs ASIC, les unités de décalage 20 sont typiquement réalisées directement par câblage et les ressources matérielles pour mettre en œuvre les unités de sommation 30 du troisième ensemble 28 sont également moindres par rapport à un multiplieur par décalage et addition de l'état de la technique.

Un autre avantage qu'offre l'utilisation du multiplieur par décalages multiplexés et addition 10 au sein du calculateur électronique 50 pour la mise en œuvre du réseau de neurones RN est qu'il n'est alors plus nécessaire de stocker dans une mémoire les valeurs de paramètre, telles que les valeurs de poids, ces valeurs de paramètre étant directement codées à travers le premier ensemble 18 d'unités de décalage 20. Ceci permet alors de diminuer un taux de lecture en mémoire du calculateur 50, et d'améliorer encore le bilan énergétique du calculateur électronique 50 selon l'invention mettant en œuvre le réseau de neurones RN.

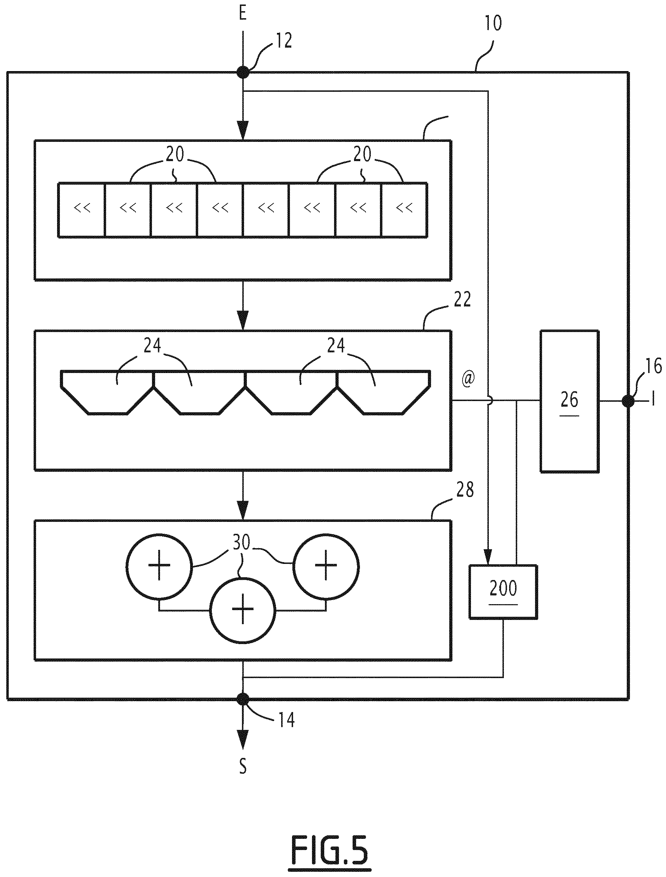

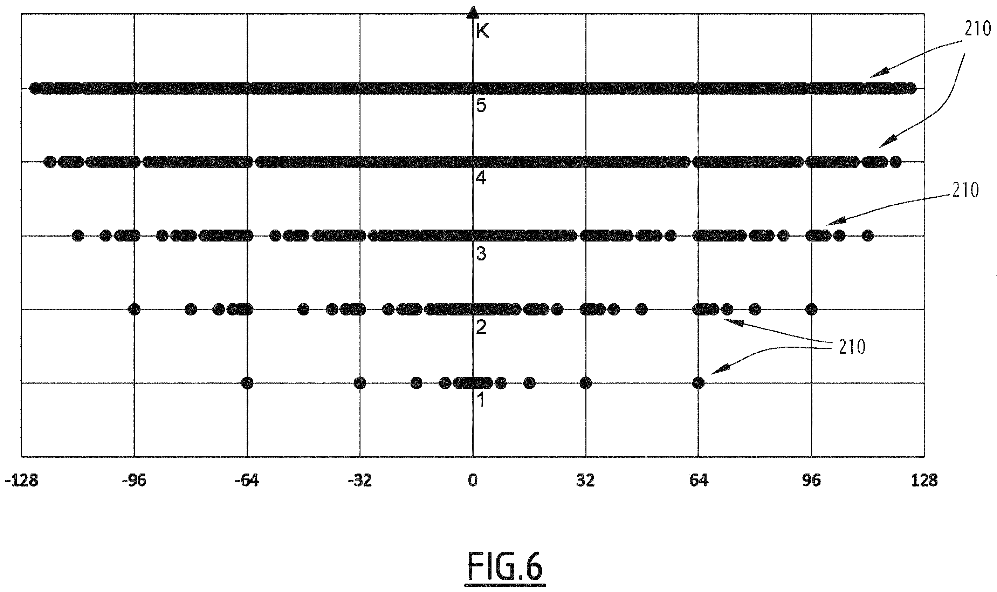

Les figures 5 et 6 illustrent un deuxième mode de réalisation de l'invention pour lequel les éléments analogues au premier mode de réalisation, décrit précédemment, sont repérés par des références identiques, et ne sont pas décrits à nouveau.

Selon le deuxième mode de réalisation, parmi la valeur binaire E reçue sur le bus d'entrée 12 et la valeur multiplicative respective, au moins une valeur est signée.

Selon ce deuxième mode de réalisation, si au moins une valeur parmi la valeur binaire d'entrée E et la valeur multiplicative est signée, le multiplieur 10 selon l'invention comprend en outre une unité de calcul 200, connectée d'une part au bus d'entrée 12 et d'autre part à l'unité de commande 26.

L'unité de calcul 200 est alors configurée pour calculer un bit de signe du produit de la valeur E reçue en entrée et de la valeur multiplicative respective, puis pour concaténer le bit de signe calculé à la valeur délivrée en sortie du troisième ensemble 28 d'unité(s) de sommation 30.

En complément facultatif, si au moins une valeur parmi la valeur d'entrée E et la valeur multiplicative est une valeur signée, chaque valeur signée est codée avec un codage en bit de signe. Ce codage en bit de signe permet alors, à la différence d'un codage en complément à deux, d'avoir une distribution des valeurs possibles centrée sur zéro, comme représenté sur la figure 6. En effet, ce codage en bit de signe permet de représenter les valeurs négatives faibles avec le même nombre de bits que les valeurs positives.

Sur la figure 6, de manière analogue à la figure 2, les différentes valeurs multiplicatives possibles sont représentées sous forme de rangées horizontales 210, chaque rangée horizontale 210 représentant, sous forme de points, une succession des valeurs possibles pour une valeur donnée du nombre maximal K de bit(s) non-nul(s) dans la forme binaire de la valeur multiplicative.

Avec ce codage en bit de signe, l'homme du métier observera alors que, quelle que soit la valeur du nombre maximal K de bit(s) non-nul(s) dans la forme binaire de la valeur multiplicative, les valeurs possibles de cette valeur multiplicative forment une distribution centrée sur zéro.

Selon ce complément facultatif, le bit de signe de la valeur d'entrée E est ignoré dans les unités de décalage 20, et n'est donc pas pris en compte par le premier ensemble 18, ce bit de signe de la valeur d'entrée E étant seulement utilisé par l'unité de calcul 200.

L'unité de calcul 200 est en effet de préférence configurée pour calculer ledit bit de signe qui est concaténé à la valeur délivrée en sortie du troisième ensemble 28, en fonction de la ou chaque valeur signée parmi la valeur d'entrée E et la valeur multiplicative.

L'unité de calcul 200 comporte par exemple une table de correspondance (de l'anglais *look-up* table), permettant de définir en fonction du bit de signe de la valeur d'entrée E et pour chaque valeur multiplicative possible, la valeur du bit de signe à concaténer à la valeur délivrée en sortie du troisième ensemble 28.

Le fonctionnement de ce deuxième mode de réalisation est analogue à celui du premier mode de réalisation, et n'est donc pas décrit à nouveau.

Les avantages de ce deuxième mode de réalisation sont analogues à ceux du premier mode de réalisation, et ne sont donc pas décrits à nouveau.

Lorsqu'en complément la distribution des valeurs multiplicatives possibles est centrée sur zéro, ceci permet alors une meilleure répartition de la précision pour les valeurs multiplicatives, et en particulier pour les valeurs de paramètre, tels que valeurs de poids et/ou de biais, du réseau de neurones RN mis en œuvre par le calculateur électronique 50 selon l'invention comprenant une pluralité de multiplieurs par décalages multiplexés et addition 10.

On conçoit ainsi que le multiplieur par décalages multiplexés et addition 10 selon l'invention permet d'effectuer des opérations de multiplication pour différentes valeurs multiplicatives, tout en ayant une variabilité de latence temporelle minimale d'une valeur multiplicative à l'autre.

## Revendications

1. Multiplieur par décalage et addition (10) apte à effectuer des opérations de multiplication par des valeurs multiplicatives, les valeurs multiplicatives comportant, lorsqu'elles sont exprimées sous forme binaire, au plus K bit(s) non-nul(s), K étant un nombre entier supérieur ou égal à 1, le multiplieur (10) étant configuré pour recevoir en entrée (12) une valeur exprimée sous une forme binaire et délivrer en sortie (14) le produit de la valeur reçue en entrée et d'une valeur multiplicative respective, le multiplieur (10) comprenant :

   - un ensemble (18) de plusieurs unités de décalage (20), chaque unité de décalage (20) étant connectée à l'entrée (12) et configurée pour effectuer un décalage de P bit(s) de la valeur reçue en entrée, où P est compris entre 0 et N-1, avec N nombre de bits de la forme binaire en entrée et P varie d'une unité de décalage (20) à l'autre ;
   - un ensemble (28) d'unité(s) de sommation (30), configuré pour sommer les sorties des unités de décalage (20) ;
   - un ensemble (22) d'unité(s) de multiplexage (24) connecté entre l'ensemble (18) d'unités de décalage (20) et l'ensemble (28) d'unité(s) de sommation (30), et une unité de commande (26) configurée pour commander l'ensemble (22) d'unité(s) de multiplexage (24) pour sélectionner, en fonction de la valeur multiplicative respective, des sorties respectives des unités de décalage (20) et les délivrer à l'ensemble (28) d'unité(s) de sommation (30),
   le nombre d'unités de décalage (20) dépendant du nombre maximal K de bit(s) non-nul(s) de la liste des différentes valeurs multiplicatives associées au multiplieur (10),
   **caractérisé en ce que** le nombre d'unité(s) de multiplexage (24) contenue(s) dans l'ensemble (22) d'unité(s) de multiplexage est supérieur ou égal au nombre maximal K de bit(s) non-nul(s).

2. Multiplieur (10) selon la revendication 1, dans lequel si au moins une valeur est signée parmi la valeur reçue en entrée (12) et la valeur multiplicative respective, chaque valeur signée est codée avec un codage en bit de signe.

3. Multiplieur (10) selon la revendication 2, dans lequel si la valeur multiplicative respective est signée, le multiplieur (10) comprend en outre une unité de calcul (200) configurée pour calculer un bit de signe du produit de la valeur reçue en entrée (12) et de la valeur multiplicative respective et pour concaténer le bit de signe à la valeur délivrée en sortie de l'ensemble (28) d'unité(s) de sommation (30), l'unité de calcul (200) étant connectée à l'entrée (12) et à l'unité de commande (26),

   l'unité de calcul (200) étant de préférence configurée pour calculer ledit bit de signe en fonction de la ou chaque valeur signée parmi la valeur reçue en entrée (12) et la valeur multiplicative respective ;
   l'unité de calcul (200) comportant de préférence encore une table de correspondance.

**4.** Multiplieur (10) selon l'une quelconque des revendications précédentes, dans lequel l'ensemble (28) d'unité(s) de sommation (30) comprend en outre une unité d'addition constante, pour ajouter une valeur de biais à la valeur multiplicative respective.

**5.** Multiplieur (10) selon l'une quelconque des revendications précédentes, dans lequel l'ensemble (28) d'unité(s) de sommation (30) est en forme d'un arbre, l'ensemble (28) d'unité(s) de sommation (30) comportant, pour chaque paire respective d'unités de multiplexage (24), une unité de sommation (30) connectée en sortie de ladite paire d'unités de multiplexage (24) ; et
si le nombre d'unités de multiplexage (24) est supérieur à 2, l'ensemble (28) d'unité(s) de sommation (30) comportant une ou plusieurs autres unités de sommation (30), chacune connectée en sortie d'une paire respective d'unités de sommation (30).

**6.** Calculateur électronique (50) configuré pour mettre en œuvre un réseau de neurones artificiels, le calculateur (50) comprenant une pluralité de multiplieurs par décalage et addition (10), chacun étant apte à effectuer des opérations de multiplication par des valeurs de paramètre, tels que valeurs de poids et/ou de biais, du réseau de neurones, **caractérisé en ce qu'**au moins un, de préférence chaque, multiplieur par décalage et addition (10) est selon l'une quelconque des revendications précédentes, les valeurs multiplicatives étant lesdites valeurs de paramètre.

**7.** Calculateur (50) selon la revendication précédente, dans lequel le calculateur (50) est réalisé sous forme d'un ou plusieurs circuits intégrés dédiés, tel qu'un ou plusieurs ASIC.

**8.** Procédé d'apprentissage de valeurs de paramètre d'un réseau de neurones artificiels mis en œuvre par un calculateur électronique (50) selon la revendication 6 ou 7,

le procédé comprenant l'étape suivante :

- apprentissage (110) des valeurs de paramètre, tels que valeurs de poids et/ou de biais, du réseau de neurones, à partir de données d'apprentissage ;

**caractérisé en ce qu'**il comprend en outre, préalablement à l'étape d'apprentissage (110), une étape (100) de détermination d'un jeu de valeurs autorisées pour les valeurs de paramètre du réseau de neurones,
l'étape d'apprentissage (110) étant effectuée en fonction notamment du jeu de valeurs autorisées, chaque valeur apprise de paramètre du réseau de neurones étant parmi le jeu de valeurs autorisées, et
**en ce que** le jeu de valeurs autorisées est constitué des valeurs qui, lorsqu'elles sont exprimées sous forme binaire, comportent au plus K bit(s) non-nul(s), où K est un nombre entier supérieur ou égal à 1,
le jeu de valeurs autorisées étant de préférence constitué des valeurs qui, lorsqu'elles sont exprimées sous forme binaire, comportent exactement K bit(s) non-nul(s).

**9.** Procédé selon la revendication précédente, dans lequel l'étape de détermination (100) comporte en outre l'estimation d'un élément parmi une table de correspondance de valeurs de gradient pour le jeu de valeurs autorisées et une fonction dérivable (F) modélisant le jeu de valeurs autorisées, et
dans lequel l'étape d'apprentissage (110) est effectuée via un algorithme de rétro-propagation pour le calcul du gradient de chaque paramètre du réseau de neurones, le gradient étant calculé à partir de l'élément estimé.

**10.** Procédé selon la revendication 8 ou 9, dans lequel le nombre K de bit(s) non-nul(s) est prédéfini, de préférence pour chaque multiplieur par décalage et addition (10), le nombre maximal K étant variable d'un multiplieur (10) à l'autre.

**Patentansprüche**

**1.** Multiplikator durch Multiplexverschiebungen und Addition (10), der geeignet ist, um Multiplikationsoperationen mit multiplikativen Werten durchzuführen, die multiplikative Werte umfassend, wenn sie in binärer Form ausgedrückt sind, höchstens K Bit(s) ungleich Null, wobei K eine ganze Zahl größer als oder gleich wie 1 ist, wobei der Multiplikator (10) konfiguriert ist, um an dem Eingang (12) einen in binärer Form ausgedrückten Wert zu empfangen und an dem Ausgang (14) das Produkt aus dem an dem Eingang empfangenen Wert und einem jeweiligen Multiplikatorwert auszugeben, der Multiplikator (10) umfassend:

- einen Satz (18) aus mehreren Verschiebungseinheiten (20), wobei jede Verschiebungseinheit (20) mit dem Eingang (12) verbunden und konfiguriert ist, um eine Verschiebung des an dem Eingang empfangenen Werts um P Bit(s) zu bewirken, wobei P zwischen 0 und N-1 liegt, wobei N die Anzahl von Bits der binären Form am Eingang ist und P von einer Verschiebungseinheit (20) zur anderen variiert;

- einen Satz (28) von Summiereinheit(en) (30), der konfiguriert ist, um die Ausgänge der Verschiebungseinheiten (20) zu summieren;

- einen Satz (22) von Multiplexereinheit(en) (24), der zwischen dem Satz (18) von Verschiebungseinheiten (20) und dem Satz (28) von Summiereinheit(en) (30) verbunden ist, und eine Steuereinheit (26), die konfiguriert ist, um den Satz (22) von Multiplexereinheit(en) (24) zu steuern, um abhängig von dem jeweiligen Multiplikationswert jeweilige Ausgänge der Verschiebungseinheiten (20) auszuwählen und sie dem Satz (28) von Summiereinheit(en) (30) zuzuführen,

wobei die Anzahl der Verschiebungseinheiten (20) von der maximalen Anzahl K von Bit(s) ungleich null der Liste der verschiedenen multiplikativen Werte abhängt, die mit dem Multiplikator (10) assoziiert sind,

**dadurch gekennzeichnet, dass** die Anzahl der Multiplexereinheit(en) (24), die in dem Satz (22) von Multiplexereinheit(en) enthalten ist/sind, größer als oder gleich wie die maximale Anzahl K von Bit(s) ungleich Null ist.

2. Multiplikator (10) nach Anspruch 1, wobei, wenn mindestens ein Wert signiert ist, von dem empfangenen Wert am Eingang (12) und dem jeweiligen multiplikativen Wert, jeder signierte Wert mit einer Vorzeichenbitcodierung codiert wird.

3. Multiplikator (10) nach Anspruch 2, wobei, wenn der jeweilige Multiplikationswert signiert ist, der Multiplikator (10) ferner eine Recheneinheit (200) umfasst, die konfiguriert ist, um ein Vorzeichenbit des Produkts aus dem empfangenen Wert am Eingang (12) und dem jeweiligen Multiplikationswert zu berechnen und das Vorzeichenbit mit dem von dem Satz (28) von Summiereinheit(en) (30) ausgegebenen Wert zu verknüpfen, wobei die Recheneinheit (200) mit dem Eingang (12) und der Steuereinheit (26) verbunden ist,

wobei die Recheneinheit (200) vorzugsweise konfiguriert ist, um das Vorzeichenbit abhängig von dem oder jedem signierten Wert des empfangenen Werts am Eingang (12) und des jeweiligen Multiplikationswerts zu berechnen;

wobei die Recheneinheit (200) vorzugsweise noch eine Entsprechungstabelle umfasst.

4. Multiplikator (10) nach einem der vorherigen Ansprüche, wobei der Satz (28) von Summiereinheit(en) (30) ferner eine konstante Additionseinheit umfasst, um einen Bias-Wert zu dem jeweiligen multiplikativen Wert zu addieren.

5. Multiplikator (10) nach einem der vorherigen Ansprüche, wobei der Satz (28) von Summiereinheit(en) (30) in Form eines Baums ist, der Satz (28) von Summiereinheit(en) (30) für jedes jeweilige Paar von Multiplexereinheiten (24) eine Summiereinheit (30) umfasst, die mit dem Ausgang des Paars von Multiplexereinheiten (24) verbunden ist; und wenn die Anzahl der Multiplexereinheiten (24) größer als 2 ist, der Satz (28) von Summiereinheit(en) (30) eine oder mehrere weitere Summiereinheiten (30) umfasst, die jeweils mit dem Ausgang eines jeweiligen Paars von Summiereinheiten (30) verbunden sind.

6. Elektronischer Rechner (50), der konfiguriert ist, um ein künstliches neuronales Netz zu implementieren, der Rechner (50) umfassend eine Vielzahl von Multiplikatoren durch Multiplexverschiebungen und Addition (10), wobei jeder geeignet ist, um Multiplikationsoperationen mit Parameterwerten, wie beispielsweise Gewichtungs- und/oder Bias-Werten, des neuronalen Netzes durchzuführen,

**dadurch gekennzeichnet, dass** mindestens ein, vorzugsweise jeder, Multiplikator durch Multiplexverschiebungen und Addition (10) gemäß einem der vorherigen Ansprüche ist, wobei die Multiplikationswerte die genannten Parameterwerte sind.

7. Rechner (50) nach dem vorherigen Anspruch, wobei der Rechner (50) in Form einer oder mehrerer dedizierter integrierter Schaltungen, wie beispielsweise einer oder mehrerer ASICs, ausgeführt ist.

8. Verfahren zum Lernen von Parameterwerten eines künstlichen neuronalen Netzes, das von einem elektronischen Rechner (50) nach Anspruch 6 oder 7 implementiert wird,

das Verfahren umfassend den folgenden Schritt:

- Lernen (110) von Parameterwerten, wie beispielsweise Gewichtungs- und/oder Bias-Werten, des neuronalen Netzes anhand von Trainingsdaten;

**dadurch gekennzeichnet, dass** es ferner vor dem Lernschritt (110) einen Schritt (100) zum Bestimmen eines Satzes von zulässigen Werten für die Parameterwerte des neuronalen Netzes umfasst,
wobei der Lernschritt (110) insbesondere abhängig von dem Satz zulässiger Werte durchgeführt wird, wobei jeder gelernte Wert des Parameters des neuronalen Netzes aus dem Satz zulässiger Werte ist, und
dass der Satz zulässiger Werte aus den Werten besteht, die, wenn sie in binärer Form ausgedrückt sind, höchstens K Bit(s) ungleich Null umfassen, wobei K eine ganze Zahl größer als oder gleich wie 1 ist,
wobei der Satz zulässiger Werte vorzugsweise aus Werten besteht, die, wenn sie in binärer Form ausgedrückt werden, genau K Bit(s) ungleich Null umfassen.

9. Verfahren nach dem vorherigen Anspruch, wobei der Bestimmungsschritt (100) ferner ein Schätzen eines Elements aus einer Entsprechungstabelle von Gradientenwerten für den Satz zulässiger Werte und einer ableitbaren Funktion (F), die den Satz zulässiger Werte modelliert, umfasst, und
wobei der Lernschritt (110) über einen Rückwärtspropagationsalgorithmus für die Berechnung des Gradienten von jedem Parameter des neuronalen Netzes durchgeführt wird, wobei der Gradient anhand des geschätzten Elements berechnet wird.

10. Verfahren nach Anspruch 8 oder 9, wobei die Anzahl K von Bit(s) ungleich Null vordefiniert ist,
vorzugsweise wobei die maximale Anzahl K von einem Multiplikator (10) zu dem anderen für jeden Schiebe- und Additionsmultiplizierer (10) variabel ist.

**Claims**

1. A shift-and-add multiplier (10) able to perform multiplication operations by multiplicative values, the multiplier (10) being configured to receive at an input (12) a value (E) expressed in binary form and to deliver in an output (14) the product of the received input value (E) and a respective multiplicative value, the multiplier (10) comprising:

- a set (18) of a plurality of shift units (20), each shift unit (20) being connected to the input (12) and configured to perform a shift of P bit(s) of the value (E) received at the input, where P is between 0 and N-1, with N number of bits of the binary form at the input and P varies from one shift unit (20) to another;
- a set (28) of summation unit(s) (30), configured to sum the outputs of the shift units (20);
- a set (22) of multiplexing unit(s) (24) connected between the set (18) of shift units (20) and the set (28) of summation unit(s) (30) and a control unit (26) configured to control the set (22) of multiplexing unit(s) (24) to select respective outputs of the shift units (20) according to the respective multiplicative value and to deliver them to the set (28) of summation unit(s) (30),
the number of shift units (20) depending on the maximum number K of non-zero bit(s) of the list of different multiplicative values associated with the multiplier (10), and
**characterized in that** the number of multiplexing unit(s) (24) contained in the set (22) of multiplexing unit(s) the second set (22) is greater than or equal to the maximum number K of non-zero bit(s).

2. The multiplier (10) according to claim 1, wherein if at least one value is signed among the value (E) received at input (12) and the respective multiplicative value, each signed value is encoded with sign bit coding.

3. The multiplier (10) according to claim 2, wherein if the respective multiplicative value is signed, the multiplier (10) further comprises a calculation unit (200) configured to calculate a sign bit of the product of the value (E) received at the input (12) and the respective multiplicative value and to concatenate the sign bit to the value delivered in output of the set (28) of shift unit(s) (30), the calculation unit (200) being connected to the input (12) and to the control unit (26),

the calculation unit (200) preferably being configured to calculate said sign bit according to the or each signed value among the values (E) received at the input (12) and the respective multiplicative value,
the calculation unit (200) preferably further including a look-up table.

4. The multiplier (10) according to any one of the preceding claims, wherein the set (28) of summation unit(s) (30) further comprises a constant addition unit, for adding a bias value to the respective multiplicative value.

5. The multiplier (10) according to any one of the preceding claims, wherein the set (28) of summation unit(s) (30) is in the form of a tree, the set (28) of summation unit(s) (30) including, for each respective pair of multiplexing units (24), a summation unit (30) connected to the output of said pair of multiplexing units (24); and
if the number of multiplexing units (24) is greater than 2, the set (28) of summation unit(s) (30) including one or more further summation units (30), each connected to the output of a respective pair of summation units (30).

6. An electronic calculator (50) configured to implement an artificial neural network, the calculator (50) comprising a plurality of shift-and-add multipliers (10), each being able to perform multiplication operations by parameter values, such as weights and/or bias values, of the neural network
**characterized in that** at least one, preferably each, shift-and-add multiplier (10) is according to any of the preceding claims, the multiplicative values being said parameter values.

7. The calculator (50) according to the preceding claim, wherein the calculator (50) is implemented as one or more dedicated integrated circuits, such as one or more ASIC.

8. A method for learning parameter values of an artificial neural network implemented by an electronic calculator (50) according to claim 6 or 7, the method comprising the following step:

- learning (110) parameter values, such as weight and/or bias values, of the neural network, from training data;
**characterized in that** it further comprises, prior to the learning step (110), a step (100) of determining a set of allowed values for the parameter values of the neural network,
the learning step (110) being carried out in particular according to the set of allowed values, each learned parameter value of the neural network being among the set of allowed values, and
**in that** the set of allowed values consists of values which, when expressed in binary form, include at most K non-zero bit(s), where K is an integer greater than or equal to 1,
the set of allowed values preferably consisting of values which, when expressed in binary form, include exactly K non-zero bit(s).

9. The method according to the preceding claim, wherein the determining step (100) further includes estimating one of a gradient value look-up table for the set of allowed values and a derivable function (F) modeling the set of allowed values, and
wherein the learning step (110) is performed via a backpropagation algorithm for calculating the gradient of each parameter of the neural network, the gradient being calculated from the estimated feature.

10. The method according to claim 8 or 9, wherein the number K of non-zero bit(s) is predefined,
preferably for each shift-and-add multiplier (10), the maximum number K being variable from one multiplier (10) to another multiplier.

FIG.1

EP 3 971 788 B1

FIG.2

FIG.3

Détermination d'un jeu de valeurs autorisées pour des valeurs de paramètre d'un réseau de neurones — 100

Apprentissage des valeurs de paramètre du réseau de neurones en fonction du jeu de valeurs autorisées — 110

## FIG.4

## FIG.5

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE TUMMELTSHAMMER**. *Time-Multiplexed Multiple-Constant Multiplication*